# EUROPÄISCHE PATENTANMELDUNG

(11) **EP 1 217 777 A1**
(43) Veröffentlichungstag der Anmeldung: **26.06.2002**
(21) Anmeldenummer: 00128431.4
(22) Anmeldetag: 22.12.2000
(51) Int. Cl.: H04L 1/18

(54) **Verfahren und Kommunikationssystem zur Übertragung von Datenpaketen, insbesondere bei Anwendung von Hybrid-ARQ-Verfahren**

(71) Anmelder: SIEMENS AKTIENGESELLSCHAFT, 80333 München (DE)
(72) Erfinder: Dold, Joachim, 10823 Berlin (DE); Gessner, Christina, 13587 Berlin (DE); Hillebrand, Frank, 13587 Berlin (DE); Kuipers, Martin, 13599 Berlin (DE); Lehmann, Gerald, 12101 Berlin (DE); Meiling, Axel, 13597 Berlin (DE); Papoutsis, Georgios, 10719 Berlin (DE); Plogsties, Jens, 12524 Berlin (DE); Raji, Fariba, 10625 Berlin (DE); Schindler, Jürgen, Dr., 15555 Berlin (DE); Schniedenharn, Joerg, 13587 Berlin (DE); Schmitz, Heiko, Dr., 13347 Berlin (DE); Wegner, Frank, 13407 Berlin (DE)

(57) **Zusammenfassung**

Die Erfindung bezieht sich auf ein Verfahren zur Übertragung von Datenpaketen (PDU) über eine Schnittstelle in einem Kommunikationssystem (GSM, UMTS) zwischen einer Sendereinrichtung (BS) und einer Empfängereinrichtung (MS), wobei eine Aussendung von bezugslosen Datenpaketen ohne Inhaltsbezug auf vorherige Datenpakete und/oder von inhaltsbezogenen Datenpaketen mit Inhaltsbezug auf vorherige Datenpakete über eine unterteilte Ressource (t) durchgeführt wird und wobei die Aussendung dieser Datenpakete jeweils einem bestimmten Ressourcenelement (Zeitschlitz tx) der Ressource (t) zugeordnet erfolgt.

Zur sichereren Zuordnung eines Datenpakets mit fehlerhafter oder fehlender Sequenznummer wird vorgeschlagen, dass die Zuordnung der Datenpakete (PDU, SQ11) zu den Ressourcenelementen (t2, t6) nach einem vorbestimmten und nicht zufälligen Schema (C1, C2) unter verschiedener Behandlung der bezugslosen und der inhaltsbezogenen Datenpakete (SQ11 bei t2 bzw. SQ11 bei t6) erfolgt. Vorteilhafterweise ermöglicht dies empfängerseitig eine Zuordnung eines empfangenen Datenpakets als entweder ein neues Datenpaket (SQ11 bei t2) ohne Bezug auf den Inhalt eines anderen Datenpakets oder ein Datenpaket (SQ11 bei t6) mit Bezug auf den Inhalt einer vorbestimmbar begrenzten Anzahl bestimmter anderer Datenpakete.

## Beschreibung

Die Erfindung bezieht sich auf ein Verfahren zur Übertragung von Datenpaketen, insbesondere bei Anwendung von Fehler-Korrekturverfahren, mit den oberbegrifflichen Merkmalen des Patentanspruchs 1 bzw. auf ein Kommunikationssystem zum Durchführen eines solchen Verfahrens.

Bei digitalen Funk-Kommunikationssystemen, beispielsweise dem Mobilfunksystem GSM (Global System for Mobile Communications), werden Informationen wie beispielsweise Sprache, Bildinformation oder andere Daten mit Hilfe von elektromagnetischen Wellen über eine Funkschnittstelle übertragen. Die Funkschnittstelle dient als eine Verbindung zwischen einer Basisstation und einer Vielzahl von Teilnehmerstationen, wobei die Teilnehmerstationen beispielsweise Mobilstationen oder ortsfeste Funkstationen sein können. Das Abstrahlen der elektromagnetischen Wellen erfolgt dabei mit Trägerfrequenzen, die in einem für das jeweilige System vorgesehenen Frequenzband liegen.

Um den Bedarf des zur Verfügung stehenden Spektrums an der knappen Ressource "Trägerfrequenz" besser zu decken, wurden synchrone Multiplexverfahren auf der Basis eines frequenz-, zeit- und/oder spreizcodeselektiven Vielfachzugriffs zur Verteilung der Übertragungskapazität eines Kanals auf mehrere Verbindungen eingeführt. Hierzu wird in Absprache zwischen Sender und Empfänger unter Einbeziehung eventueller Vermittlungsknoten ein vorgegebenes Raster aus sende- und empfangssynchronen Frequenzbändern, Zeitschlitzen und/oder Codesequenzen genutzt. Die Sender ordnen die Daten der einzelnen Verbindungen diesem Raster zu und die Empfänger separieren aus dem empfangenen Datenstrom die für sie bestimmten Daten.

Für die dritte Mobilfunkgeneration UMTS (Universal Mobile Telecommunications System) sind z.B. zwei Modi vorgesehen, wobei ein Modus einen FDD-Betrieb (Frequency Division Duplex) und der andere Modus einen TDD-Betrieb (Time Division Duplex) zugrunde legt. Diese Modi finden ihre Anwendung in unterschiedlichen Frequenzbändern, wobei beide Modi ein codeteilendes sogenanntes CDMA-Teilnehmer-Separierungsverfahren (Code Division Multiple Access) unterstützen.

Ein weiteres grundsätzliches Verfahren ist die Paketvermittlung. Sie beruht auf der gemeinsamen Nutzung eines Übertragungskanals mit hoher Übertragungskapazität durch mehrere verschiedene Verbindungen. Auch hierfür wird der Übertragungskanal auf der Zeitachse unterteilt, allerdings nicht in feste Zeitschlitze, sondern in adressierte Datenpakete variabler Länge, wobei durch zusätzliche Trennung in Code oder Frequenz auch mehrere Pakete gleichzeitig gesendet werden können. Die Daten werden zeitvariant in Art eines asynchronen Multiplex-Verfahrens übertragen. Jeder Sender kann jederzeit auf die bis dahin ungenutzte Übertragungskapazität zugreifen und seine Daten z.B. nach dem ALOHA-Verfahren, einem stochastischem Zugriffsverfahren, übertragen. Der Sender kann außerdem die effektive Datenrate sowohl dadurch beeinflussen, in welchen zeitlichen Abständen er die Datenpakete sendet, als auch durch deren Länge, Anzahl der verwendeten Codes, verwendete Bitraten oder Frequenzen.

Große Datenpakete lassen sich oftmals nicht in einem Stück übertragen. Deshalb werden sie vor der eigentlichen Übertragung in kleine Datenpakete, sogenannte Paketdateneinheiten (PDU: Protocol Data Unit) unterteilt. Jedes Datenpaket enthält Nutzdaten und wird in der Regel mit einem Kopfabschnitt (Header) versehen. Außerdem enthält jedes Datenpaket eine Lauf- bzw. Sequenznummer, insbesondere im Kopfabschnitt und ggf. weitere für den Transport erforderliche Angaben. Die Sequenznummer ist ein Identifizierungskennzeichen zur direkten Kennzeichnung eines bestimmten Datenpakets. Insbesondere am Ende der Nutzdaten ist zum Erkennen von Fehlern, die auf der Übertragungsstrecke entstehen, oftmals eine Prüfsumme hinzugefügt, die mittels eines fehlererkennenden Codes (CRC: zyklischer Redundanzcheck-Code) über die Nutzdatenbit berechnet wird. Für den Kopfabschnitt kann eine separate CRC bereitgestellt werden.

Der Mobilfunkkanal ist einer der ungünstigsten Übertragungskanäle, die in der Nachrichtentechnik vorkommen. Ein Problem sind kurzfristige Empfangspegeleinbrüche und Signalverzerrungen, die hauptsächlich durch eine Mehrwegausbreitung (Fast Fading) der an Hindernissen reflektierten bzw. gebeugten Funkwellen auf der Übertragungsstrecke hervorgerufen werden. Bei der Übertragung eines Datenpakets kann es nicht nur zum Verlust von Daten, sondern auch zum Verlust des Kopfabschnitts kommen. Dadurch läßt sich ein Datenpaket nicht mehr einer Verbindung zuordnen.

Besonders kritisch ist insbesondere bei digitalen Funk-Kommunikationssystemen, wenn das Identifizierungskennzeichen bzw. die Sequenznummer eines Datenpakets bei der Übertragung verloren geht. Speziell bei ARQ-Fehlerkorrekturverfahren (ARQ: Automatic Repeat reQuest) mit einer Wiederholungsanforderung durch die empfangende Station werden Sequenz-Nummern dazu verwendet, dass die Empfängerseite wiederholte Übertragungen oder ergänzende Informationen zur Korrektur fehlerhaft übertragener Datenpakete anfordern kann. Beim sogenannten "Hybrid-ARQ I" informiert die Empfängerseite die sendende Station direkt oder indirekt über die erfolglos übertragenen Sequenz-Nummern und/oder die Sequenz-Nummern der erfolglos dekodierten Datenpakete, die dann von der sendenden Station nochmals verschickt werden.

Bei Hybrid ARQ II/III wird das Prinzip einer vorwärtsgerichteten Fehlerkorrektur (FEC: Forward Error Correction) mit ARQ-Verfahren verknüpft, d.h. dem zu übertragenden Datenpaket wird senderseitig Redundanz hinzugefügt, um eine Fehlerkorrektur am Empfänger zu ermöglichen. Entsprechende Datenpakete werden auch als kodierte Datenblöcke bezeichnet. Um bei ARQ I/II/III oder ähnlichen Verfahren zu gewährleisten, dass die zur Dekodierung kombinierten und kodierten Datenblöcke zu dem selben Datenpaket gehören, ist es ebenfalls von großer Wichtigkeit, dass bei gestörter Übertragung zumindest die Sequenznummer mit hoher Wahrscheinlichkeit beim Empfänger richtig ankommt und dieser überprüfen kann, ob er die Sequenz-Nummer korrekt empfangen hat. Um den Schutz des Kopfabschnitts zu erhöhen, kann auch dieser mit einer Fehler-Vorwärtskorrektur versehen werden.

Bei einem Verlust von Daten auf der Übertragungsstrecke, der vom Empfänger in Auswertung der Prüfsumme des CRC bemerkt wird, besteht die Möglichkeit, durch eine Wiederholungsanforderung des Empfängers eine oder alle PDUs eines Datenpaketes sofort wiederholt zu senden. Der Sender muss hierzu nachteilhafterweise eine Kopie der übertragenen Datenpakete oder kodierten Paketdateneinheiten PDU eines Datenpaketes so lange verwalten, bis er für die jeweiligen Dateneinheiten eine Empfangsbestätigung erhalten hat. Der Empfänger benötigt seinerseits nachteilhafterweise einen entsprechend sehr großen Speicher, um fehlerfreie PDUs solange zu speichern, bis alle fehlerhaften Datenpakete oder Paketdateneinheiten PDU wiederholt worden sind und die Nachricht fehlerfrei zusammengesetzt werden kann.

Erstreckt sich die Prüfsumme des CRC über Daten und Kopfabschnitt, so kann bei einem Fehler außerdem nicht eindeutig bestimmt werden, ob nur Daten oder die für eine Wiederholungsanforderung wichtige Sequenznummer falsch übertragen wurden.

Ist auf der Empfängerseite eine Sequenznummer nicht korrekt empfangen worden oder konnte die Richtigkeit der Sequenznummer nicht erfolgreich überprüft werden, dann kann normalerweise mit den bisher verwendeten Verfahren der kodierte Datenblock nicht mehr benutzt werden, um durch Kombination mit anderen kodierten Datenblöcken die Dekodierung des Datenpaketes zu unterstützen. Wird ein kodierter Datenblock verwendet, bei dem die Richtigkeit der Sequenznummer nicht bestätigt werden konnte, so besteht bei den bisher verwendeten Verfahren die Gefahr, dass kodierte Datenblöcke kombiniert werden, die nicht zum gleichen Datenpaket gehören. Mit sehr großer Wahrscheinlichkeit bleibt jeder Decodierungsversuch, der einen nicht zum Datenpaket gehörenden kodierten Datenblock mit einschließt, erfolglos. Das kann dazu führen, dass alle nachfolgenden Versuche einer Dekodierung des Datenpaketes unter Einbeziehung neuer kodierter Datenblöcke erfolglos bleiben. In diesen Fall muss mit den bisher verwendeten Verfahren ein kodierter Datenblock, dessen Sequenznummer auf der Empfängerseite unklar ist, verworfen werden. Ferner ist es bei Hybrid-ARQ-Verfahren ein nachteilhafter Umstand, dass mit jeder zusätzlichen Übertragung von kodierten Datenblöcken die Anforderung an die notwendige Kanalqualität für eine erfolgreiche Dekodierung des gesamten Datenpakets (PDU) sinkt, da sich der Kodiergewinn erhöht, während hingegen die Anforderung an die Übertragung der Sequenznummer im Header steigt, da sich die Anzahl der übertragenen Datenblöcke und damit die Anzahl der Header mit einer Sequenznummer durch jede Übertragung eines kodierten Datenblocks erhöht und dabei jeweils eine zusätzliche fehlerfreie Detektion der Sequenznummer erforderlich ist, da für eine richtige Zuordnung der empfangenen Datenblöcke alle Sequenznummern fehlerfrei dekodiert werden müssen.

Da der Header einer fehlerhaft empfangenen PDU eventuell nicht decodiert werden kann und somit der Empfänger nicht in der Lage ist, den Sender anzuweisen, diese PDU wiederholt zu senden, gibt es Konzepte, bei denen der Header nicht mit den Nutzdaten in einem Verkehrskanal, sondern getrennt in einem Kontrollkanal mit höherem Fehlerschutz übertragen wird. Dieser Kontrollkanal, zum Beispiel bei Übertragung in Abwärtsrichtung (Downlink) der FACH (Fast Associated Control Channel), benötigt, da er sich unter Umständen nicht im gleichen zeitlichen Gefüge wie der Verkehrskanal befindet, nachteilhafterweise eine zusätzliche Identifizierungs-Signalisierung, um den Teilnehmer im System ausfindig zu machen und ihm den Header zuweisen zu können. Des weiteren wird dieser Kontrollkanal mit einer endlichen Kapazität von vielen Teilnehmern im System gleichzeitig genutzt, was zu einer Überlastung der Ressource führen kann.

Die in diesem Zusammenhang bisher vorgeschlagenen Verbesserungsmethoden, zielen auf eine sicherere Übertragung der Sequenznummer als solcher ab oder schlagen verbesserte Methoden zur Überprüfung der Richtigkeit der empfangenen Sequenznummer vor.

Die Aufgabe der Erfindung besteht darin, ein Verfahren bzw. ein Kommunikationssystem vorzuschlagen, bei denen mit geringem Aufwand auch die Sequenznummer einer Paketdateneinheit sicherer bestimmt werden kann.

Diese Aufgabe wird durch das Verfahren mit den Merkmalen des Patentanspruchs 1 bzw. das Kommunikationssystem gemäß den Merkmalen des Patentanspruchs 16 gelöst.

Vorteilhafte Ausgestaltungen sind Gegenstand von abhängigen Ansprüchen.

Vorteilhafterweise ermöglicht ein Verfahren zur Übertragung von Datenpaketen über eine Schnittstelle in einem Kommunikationssystem, z.B. GSM, UMTS, zwischen einer Sendereinrichtung und einer Empfängereinrichtung, bei einer Aussendung von bezugslosen Datenpaketen ohne Inhaltsbezug auf vorherige Datenpakete und von inhaltsbezogenen Datenpaketen mit Inhaltsbezug auf vorherige Datenpakete über eine unterteilte Ressource, wobei die Aussendung dieser Datenpakete jeweils einem bestimmten Ressourcenelement der Ressource zugeordnet erfolgt, eine verbesserte Zuordbarkeit eines aufgrund z.B. einer fehlerhaften oder verloren gegangenen Identifizierungskennzeichnung nicht mehr eindeutig zuordbaren Datenpakets durch eine Zuordnung zu einem jeweiligen der Ressourcenelemente nach einem vorbestimmten und nicht zufälligen Schema unter verschiedener Behandlung der bezugslosen und der inhaltsbezogenen Datenpakete. Vorbestimmt bedeutet dabei, dass das Schema sender- und empfängerseitig bekannt ist. Dabei kann das Schema der Empfängerseite von der Senderseite aus vorzugsweise erst vor Beginn einer Übertragung von Datenpaketen oder z.B. einem Verbindungsaufbau mitgeteilt werden.

Die Zuordnung der Datenpakete senderseitig vorzunehmen und mittels des Schemas empfängerseitig eine Zuordnung empfangener Datenpakete als ein bezugsloses Datenpaket oder zu einer begrenzten Anzahl, insbesondere eines bestimmten vorherigen inhaltsbezogenen Datenpakets durchzuführen, ermöglicht eine deutlich veringerte Anzahl der Zuordnungsmöglichkeiten des Datenpakets. Im Idealfall handelt es sich lediglich um die Möglichkeit eines gänzlich neuen Datenpaketes oder um den Empfang eines bereits in Arbeit befindlichen Datenpaketes. In letzterem Fall kann es sich wiederum um eine Wiederholungssendung eines nicht bestätigten Datenpakets oder insbesondere um eine Paketdateneinheit eines redundant kodierten Datenpakets handeln. Der Empfänger steht nicht mehr vor dem Problem einer großen Vielzahl von Zuordnungsmöglichkeiten, die eine versuchsweise Zuordnung nicht eindeutig identifizierbarer Datenpakete de facto ausschließen läßt.

Als Ressource eine in Zeitschlitze aufgeteilte Zeitachse bietet ein einfaches Zuordnungsschema, wobei Zeitschlitze als Ressourcenelemente nicht notwendig die in Tele-Kommunikationssystemen bereits bekannten Zeitschlitze sein müssen. Als Ressource ein in eine Vielzahl von Frequenzkanälen aufgeteiltes Frequenzband und/oder als Ressource eine Vielzahl von Codes bei einem Codespreizverfahren zu verwenden bietet alternative oder ergänzende Einteilungsmöglichkeiten.

Als Datenpaket bietet sich insbesondere ein Datenpaket mit einem eindeutigen Identifizierungskennzeichen, insbesondere einer Datenpaketnummer oder Sequenznummer an, da so auf bestehende Datenstrukturen aufgebaut werden kann. Dies gilt insbesondere, wenn als Datenpaket ein Datenpaket mit einem Kopfabschnitt, der das bestimmte Identifizierungskennzeichen aufweist, verwendet wird.

Das Schema eine zyklische Zuordnung zu den Ressourcenelementen durchführen zu lassen ermöglicht eine besonders einfache Art der Zuordnung der Ressourcenelemente.

Eines der inhaltsbezogenen, zu einem gesandten Datenpaket zugeordneten Datenpakete nach einer negativen oder nicht innerhalb einer vorgegebenen Zeitdauer eingetroffenen Empfangsbestätigung bei einem späteren, nach dem Schema eindeutig zugeordneten Ressourcenelement zu übertragen, ermöglicht eine gezielte Sendung bzw. Neusendung, wodurch die Kapazität der Ressource ideal ausgenutzt werden kann.

Als inhaltsbezogene Datenpakete können insbesondere Datenpakete mit gleichem Inhalt eines Datenblocks eines vorherigen bzw. zuvor gesendeten Datenpakets und/oder Datenpakete mit einem zum Datenblockinhalt eines vorherigen Datenpakets zugeordneten Datenblockinhalt übertragen werden.

Falls zu einem bestimmten Ressourcenelement entsprechend ein weiterer kodierter Datenblock mit Identifizierungskennzeichen zu einem zumindest teilweise übertragenen Datenpaket übertragen werden soll, dann kann besonders ressourcenschonend ein weiterer Datenblock vom ältesten bisher nicht erfolgreich übertragenen Datenpaket übertragen werden. Inhaltsbezogene Datenpakete mit zugeordnetem Datenblockinhalt können vorteilhafterweise auch kodierte Datenpakete zu einem vorherigen Datenpaket sein. Die inhaltsbezogenen Datenpakete können zur Erhöhung der Sicherheit ferner gemäß einem Fehlererfassungsoder Fehlerkorrekturverfahren wie einem ARQ-Verfahren in für sich bekannter Weise verarbeitet werden. Insbesondere können diese Fehlererfassungs- oder Fehlerkorrekturverfahren auch über den Kopfabschnitt erstreckt werden.

Empfängerseitig trotz eines nicht fehlerfrei dekodierbar oder bestimmbar zuzuordnenden Datenpakets einen Kombinierungs- oder Dekodierungsversuch mit einem anderen Datenpaket vorzunehmen wird möglich, da dieses Datenpaket gemäß dem Schema einer beliebig stark begrenzbaren Anzahl von Kombinationsmöglichkeiten mit vorherigen Datenpaketen zugeordnet werden kann.

Falls zu einem bestimmten Ressourcenelement (t(x + iN)) ein weiterer inhaltsbezogener Datenblock zu einem zumindest teilweise übertragenen Datenpaket (PDU) übertragen werden soll, dann ist dies vorteilhafterweise ein weiterer Datenblock vom ältesten bisher nicht erfolgreich übertragenen Datenpaket als inhaltsbezogenes Datenpaket, da durch eine solche Reihenfolge eine besonders schnelle und ressourcensparende Abarbeitung möglich ist.

Einen Grenzwert der für eine Verbindung verfügbaren Anzahl von Ressourcenelementen der Ressource festzulegen, gibt die Möglichkeit, nur noch bereits übertragenen Datenpaketen zugeordnete Datenpakete zu übertragen, solange die Anzahl der als mehrere bzw. weitere Datenpakete zu übertragenden Datenpakete, die zu solchen bereits übertragenen Datenpaketen zugeordnet sind, den Grenzwert oder einen festgelegten Wert mit Bezug auf den Grenzwert überschreitet. Dadurch kann der erforderliche Speicherraum auf ein gewünschtes Maß beschränkt werden.

Als die Schnittstelle bieten sich eine Luftschnittstelle oder ein elektrisch oder optisch leitendes Medium an, wie sie für sich genommen bekannt sind.

Besonders vorteilhaft ist entsprechend ein Kommunikationssystem zum Durchführen eines solchen Verfahren, wenn es aufweist: eine Sendereinrichtung, eine Empfängereinrichtung, eine Schnittstelle mit einer unterteilten Ressource zur Übertragung von Datenpaketen zwischen der Sendereinrichtung und der Empfängereinrichtung, eine Sender-Ressourcenzuordnungseinrichtung zum Aussenden von bezugslosen Datenpaketen ohne Inhaltsbezug auf vorherige Datenpakete und/oder von inhaltsbezogenen Datenpaketen mit Inhaltsbezug auf vorherige Datenpakete über die unterteilte Ressource und zum Zuordnen der Aussendung eines jeden dieser Datenpakete zu jeweils einem bestimmten Ressourcenelement der Ressource und eine Empfänger-Ressourcenzuordnungseinrichtung zum Verwalten derart zugeordneter, bei der Empfängereinrichtung eingetroffener Datenpakete, wenn die Sender- und die Empfänger-Ressourcenzuordnungseinrichtung zum Zuordnen der Datenpakete zu den Ressourcenelementen nach einem vorbestimmten und nicht zufälligen Schema unter verschiedener Behandlung der bezugslosen und der inhaltsbezogenen Datenpakete ausgebildet sind.

Ein solches Kommunikationssystem kann insbesondere ein für sich bekanntes Funk-Kommunikationssystem mit zumindest einer Basisstation als Sendereinrichtung und zumindest einer stationären und/oder mobilen Datenendeinrichtung, insbesondere mobilen Teilnehmerstation als Empfängereinrichtung sein.

Das Kommunikationssystem kann vorteilhafterweise als ein Tele-Kommunikationssystem oder Datennetz ausgebildet sein.

Ein solches Verfahren ist somit besonders vorteilhaft, da am Empfänger als Identifizierungskennzeichen auch die Sequenznummer, die sich insbesondere im Header befindet, mit geringem Kombinationsaufwand kombiniert und decodiert werden kann. Außerdem sinkt vorteilhafterweise die Anforderung an die notwendige Kanalqualität bei Anwendung eines solchen Verfahrens nicht nur für die Übertragung des Datenblocks sondern auch für die Detektion der Sequenznummer bei jeder wiederholten Übertragung (re-transmission). Dabei ist es insbesondere unerheblich, ob die Sequenznummer von Anfang an oder erst nach der letzten Übertragung fehlerfrei dekodiert werden konnte.

Das Verfahren kann auch mit verschiedenartigen anderen Verfahren zur Kombinierung, Codierung oder sonstiger Datenverarbeitung kombiniert werden. Ein Beispiel für ein einbindbares Verfahren umfasst z.B. kodierte Datenblöcke, bei denen die Sequenznummer nicht erfolgreich dekodiert werden konnte, nicht zu verwerfen, sondern für eine spätere Kombination zwischenzuspeichern. Mit steigender Anzahl von nicht zugeordneten bzw. nicht identifizierten kodierten Datenblöcken steigt der Kombinationsaufwand mit folgenden Datenblöcken allerdings überproportional.

Eine Möglichkeit der Einteilung der Ressource Zeit ist die Unterteilung eines Zeitintervalls in unterschiedliche Zeitschlitze und der Vorgabe, dass zu einem Datenpaket gehörenden Datenblöcke nur in bestimmten Zeitschlitzen gesendet werden können, wird der empfängerseitige Kombinationsaufwand von bisher nicht erfolgreich dekodierten Sequenznummern und Datenblöcken erheblich reduziert, d.h. auf im bevorzugten Fall bis zu zwei Möglichkeiten reduziert.

Durch die Möglichkeit der Kombination von empfangenen Sequenznummern in einem Zeitschlitz kann auch der Kodiergewinn bei der Dekodierung der Sequenznummer, insbesondere des Headers, bei wiederholter Sendung erhöht werden, d.h. mit jeder erneuten Sendung sinkt das für eine fehlerfreie Dekodierung notwendige Verhältnis von Signalleistung zu Interferenzleistung (C/I), so wie es auch bei der für sich bekannten Dekodierung der Datenblöcke der Fall ist.

Durch dieses Verfahren wird die erneute Sendung von Datenblöcken (re-transmission) der Datenpakete bevorzugt, bei denen die Übertragung bereits begonnen wurde.

Die Nutzung der auf der Luftschnittstelle bereitgestellten Übertragungskapazität für eine paketorientierte Übertragung wird durch dieses Verfahren optimiert. Bei guter Kanalqualität bzw. bei fast fehlerfreier Übertragung wird der erreichbare Datendurchsatz durch dieses Verfahren insbesondere nicht vermindert.

Eine Anwendung ist auch bei leitungsgebundenen Kommunikationssystemen möglich. Insbesondere ist die Anwendung auch bei leitungsgebundenen Schnittstellen zwischen Sender und Empfänger möglich, wobei als Leitung insbesondere metallische oder optische Leiter Verwendung finden können.

Ein Ausführungsbeispiel und Modifikationen werden nachfolgend anhand der Zeichnung näher erläutert. Es zeigen:
- Fig. 1: eine einfache Form einer Funkschnittstelle zwischen zwei kommunizierenden Stationen und
- Fig. 2: den Aufbau von aufeinanderfolgend übertragenen PDUs mit Angabe der Sequenz-Nummer im jeweiligen Kopfabschnitt.

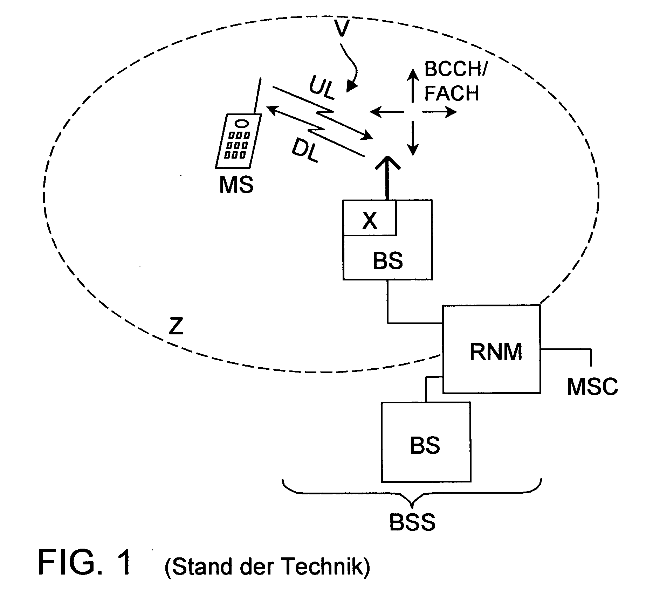

Wie aus Fig. 1 ersichtlich, ist das nachfolgend beschriebene Verfahren insbesondere in einem Kommunikationssystem, z.B. einem Mobilfunksystem anwendbar. Das beispielhaft dargestellte Mobilfunksystem als ein für sich bekanntes Funk-Kommunikationssystem weist eine Vielzahl von Netzelementen auf, insbesondere netzseitig Mobilvermittlungsstellen MSC, Einrichtungen RNM zum Zuteilen von funktechnischen Ressourcen, als Sende-/Empfangseinrichtungen Basisstationen BS und teilnehmerseitig in der untersten Hierarchieebene als Sende/Empfangseinrichtungen Teilnehmerstationen MS.

Die Mobilvermittlungsstellen MSC, die untereinander vernetzt sind und von denen hier nur eine dargestellt ist, stellen den Zugang zu einem Festnetz oder einem anderen Funknetz her. Weiterhin sind diese Mobilvermittlungsstellen MSC mit jeweils zumindest einer Einrichtung RNM zum Zuteilen von funktechnischen Ressourcen verbunden. Jede dieser Einrichtungen RNM ermöglicht wiederum eine Verbindung zu zumindest einer Basisstation BS. Eine solche Basisstation BS kann über eine Funkschnittstelle V eine Verbindung zu Teilnehmerstationen, z.B. mobilen Stationen MS oder anderweitigen mobilen und stationären Endgeräten aufbauen. Durch jede Basisstation BS wird zumindest eine Funkzelle Z gebildet. Bei einer Sektorisierung oder bei hierarchischen Zellstrukturen werden pro Basisstation BS auch mehrere Funkzellen Z versorgt.

In Fig. 1 ist beispielhaft eine bestehende Verbindung V zur Übertragung von Nutzinformationen und Signalisierungsinformationen zwischen einer mobilen Station MS und einer Basisstation BS dargestellt. Übertragungen in Aufwärtsrichtung UL (Uplink) erfolgen von der Basisstation BS zur mobilen Station MS, Übertragungen in Abwärtsrichtung DL (Down Link) in umgekehrter Richtung. Weiterhin ist ein Organisationskanal (FACH oder BCCH: Broadcast Control CHannel) dargestellt, der zur Übertragung von Nutz- und Signalisierungsinformationen mit einer definierten Sendeleistung von jeder der Basisstationen BS für alle mobilen Stationen MS im Bereich der Funkzelle Z bereitgestellt wird.

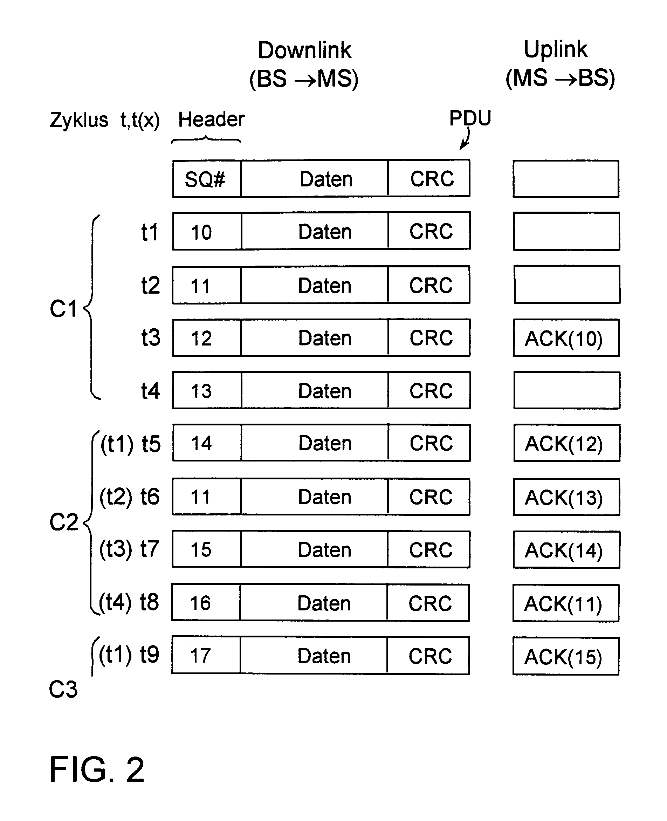

Gemäß einem in Fig. 2 skizzierten Ausführungsbeispiel weisen die Datenpakete bzw. Datenblöcke PDU (Paket Data Unit) einen Kopfabschnitt bzw. Header auf. In jedem Header ist die Datenpaketenummer bzw. Sequenznummer SQ# dieses Datenpakets eingetragen. Dem Header folgt der Abschnitt mit den eigentlichen Nutz- bzw. Anwenderdaten des Datenpakets. Vorteilhafterweise schließt an den Anwenderdatenabschnitt der Paketdateneinheit PDU ein CRC-Abschnitt an, der eine empfängerseitige Fehlerüberprüfung ermöglicht. Der Header der Paketdateneinheit PDU kann zusammen mit der Paketdateneinheit PDU im Transportkanal übertragen werden, was auch als "Inband signalling" bezeichnet wird. Hier von Bedeutung ist allerdings nur die Tatsache, dass jedes Datenpaket unabhängig vom Aufbau durch ein Identifizierungskennzeichen bestimmbar ist.

Zur verbesserten bzw. sichereren Bestimmung der Sequenznummer SQ# wird eine nachfolgend beschriebene Abfolge von Versendung und Zwischenspeicherung der Paketdateneinheiten beschrieben.

Das vorgeschlagene Verfahren führt eine (erste) Regel ein, zu welchen Zeitpunkten bzw. in welcher Reihenfolge bei Bedarf die wiederholte Sendung (re-transmisson) von einzelnen Datenpaketen oder Paketdateneinheiten, insbesondere Sequenznummer und kodierten Datenblöcken zu erfolgen hat. Dadurch wird der Kombinationsaufwand mit schon bereits empfangenen und gespeicherten, aber nicht erfolgreich dekodierten Sequenznummern und kodierten Datenblöcken wesentlich verringert.

In Fig. 2 ist die zeitliche Abfolge von beispielhaften Paketdateneinheiten PDU über die Schnittstelle V dargestellt, wobei die Zeit in der Darstellung von oben nach unten zunimmt. In der linken Spalte ist eine fortlaufende Zeiteinheit tx (x = 1, 2, 3, ...) dargestellt, wobei jede Zeiteinheit tx nachfolgend als Zeitschlitz bezeichnet wird und jeder Zeitschlitz tx lang genug ist, um innerhalb seiner Dauer eine vollständige Paketdateneinheit übertragen zu können. Die Zeitschlitze tx sind wiederum in Gruppen bzw. Zyklen C1, C2, ... aus hier beispielhaft jeweils vier Zeitschlitzen (1 - 4, 5 - 8) untergliedert.

In der mittleren Spalte sind die in den jeweiligen Zeitschlitzen tx in Abwärtsrichtung (DL) versendeten Paketdateneinheiten PDU dargestellt. In der rechten Spalte sind die in den jeweiligen Zeitschlitzen tx in Aufwärtsrichtung (UL) versendeten Empfangsbestätigungen (ACK bzw. NACK) zu den empfängerseitig eingetroffenen Paketdateneinheiten PDU dargestellt.

Die maximale Anzahl der sich in der Übertragung befindenden Datenpakete wird als Fenstergröße (WS: Windowsize) bezeichnet. Das Identifikationsmerkmal des Datenblocks, die Sequenznummer SQ#, besitzt somit allgemein einen Wertebereich von 0 bis (WS - 1). Die Fenstergröße legt fest, wieviel Speicher zum Speichern von bisher nicht erfolgreich dekodierten Datenblöcken sender- und empfängerseitig maximal benötigt würde.

Die Rundlaufzeit bzw. Rundlaufverzögerung (Round-trip-delay) ist die Zeitspanne zwischen dem Senden eines Datenpakets, ggf. eines kodierten Datenblocks bzw. einer Paketdateneinheit PDU bis zum Eintreffen der Bestätigung ACK bzw. Negativ-Bestätigung (NAK) am Sender über einen Rückkanal. Die minimale Rundlaufverzögerung (RTD_{MIN}) ist die kürzeste mögliche Zeitspanne zwischen der Sendung eines Datenblocks und dem Eintreffen der negativen oder positiven Bestätigung, die sich aufgrund der verwendeten Übertragungsprotokolle und aus den Verarbeitungsgeschwindigkeiten innerhalb der betroffenen Einrichtungen ergibt. Für die Übertragung eines Datenblocks wird eine bestimmte Übertragungszeit TT benötigt. Im folgenden wird eine Zeitspanne TI definiert, die gemäß einer besonders bevorzugten Ausführungsform größer oder gleich der minimalen Rundlaufverzögerung RTD_{MIN} gewählt wird, d.h. es gilt TI >= RTD_{MIN}. Bei später beschriebenen Ausführungsform-Modifikationen wird jedoch auf diese Bedingung verzichtet. Diese Zeitspanne TI entspricht in Fig. 2 den vorstehend genannten Zyklen C1, C2 und wird in N Zeitschlitze tx der Länge TT unterteilt, d.h. es gilt TI = N * TT. Im vorliegenden Fall beträgt die Dauer der Zeitspanne TI bzw. der Zyklen C1, C2, ... jeweils der Dauer von N = 4 aufeinanderfolgenden Zeitschlitzen tx.

Nachfolgend wird beispielhaft angenommen, dass die empfängerseitige Verarbeitungsdauer maximal der Dauer eines weiteren Zeitschlitzes tx entspricht. Folglich sollte auf das Absenden einer Paketdateneinheit mit der Sequenznummer SQ# = 10 von der Sendereinrichtung BS aus in Abwärtsrichtung im ersten Zeitschlitz t1 das Bereitstellen der Empfangsbestätigung ACK(10) in der Empfängereinrichtung MS vor Ablauf des zweiten Zeitschlitzes t2 erfolgen. Die Empfangsbestätigung ACK(10) kann dann im dritten Zeitschlitz t3 in Aufwärtsrichtung zur ursprünglichen Sendereinrichtung BS zurück übertragen werden.

Bei dem vorgeschlagenen Verfahren werden Datenpakete, Paketdateneinheiten PDU und/oder die zu einer Paketdateneinheit PDU gehörenden kodierten Datenblöcke mit zugehöriger Sequenznummer SQx in bestimmten zeitlichen Abständen gesendet. Diese zeitlichen Abstände sollen bei der besonders bevorzugten Ausführungsform, jedoch nicht zwingend, einem variablen Vielfachen des gewählten Zeitintervalls TI entsprechen, sollen hier z.B. der Dauer der Zyklen C1, C2 entsprechen. Mit anderen Worten werden Datenpakete bzw. Paketdateneinheiten PDU, die zu einem bestimmten Datenpaket gehören, insbesondere nur im gleichen Zeitschlitz tx eines Zyklus C1, C2 gesendet.

Wie aus dem Beispiel der Fig. 2 ersichtlich, trifft bei der Sendereinrichtung BS nach dem Absenden der Paketdateneinheit PDU(10) im ersten dargestellten Zeitschlitz t1 des ersten Zyklus C1 während des dritten Zeitschlitzes t3 die zugehörige positive Empfangsbestätigung ACK(10) ein. Jedoch trifft bei der Sendereinrichtung BS die zu der im zweiten Zeitschlitz t2 abgesendeten Paketdateneinheit PDU(11) gehörende Empfangsbestätigung (ACK(11)) gar nicht ein oder zumindest vor dem zweiten Zeitschlitz t6 (=t2(C2)) des nachfolgenden, zweiten Zyklus C2 nicht ein. Gleichbedeutend mit dem fehlenden Eintreffen einer positiven Empfangsbestätigung ACK() kann eine negative Empfangsbestätigung NACK() gehandhabt werden, da diese auf einen fehlenden oder fehlerhaften Empfang bei der Empfängereinrichtung MS hinweist. Entsprechend wird im zweiten Zeitschlitz t6 des zweiten Zyklus C2 eine erneute Übertragung (re-transmission) der Paketdateneinheit mit der Sequenznummer SQ11 vorgenommen.

Wird in der Sendereinrichtung BS vor dem Beginn eines Zeitschlitzes tx, z.B. dem Zeitschlitz t5 (=t1(C2)) im zweiten Zyklus eine entsprechende positive Empfangsbestätigung ACK(10) empfangen, so wird in diesem Zeitschlitz t5 eine neue Paketdateneinheit PDU(14) des entsprechenden Datenpakets, eines neuen Datenpakets oder ein neues Datenpaket versendet.

Weiterer vorteilhafter Bestandteil des Verfahrens ist eine zweite Regel: Wenn zu einem bestimmten Zeitpunkt t(x + iN) entsprechend erster Regel ein weiterer kodierter Datenblock mit Sequenznummer gesendet werden soll (re-transmission), dann wird ein weiterer Datenblock vom ältesten bisher nicht erfolgreich übertragenen Datenpaket gesendet werden, d.h. von dem Datenpaket, bei dem die Sendung erster Datenblöcke in dem betreffenden Zeitschlitz tx zeitlich am weitesten zurückliegt.

D.h. insbesondere, dass Regel 1 besagt, dass die Übertragung eines weiteren Datenblocks (re-transmission) zu diesen Zeitpunkt tx geschehen kann, aber nicht muss. Dies bedeutet, dass zu einem Zeitpunkt tx entweder der erste Datenblock eines neuen Datenpakets oder ein weiterer Datenblock des ältesten Datenpakets, was noch nicht erfolgreich übertragen worden ist, gesendet werden kann. Daher gibt es bei z.B. ARQ-Verfahren an der Empfängerseite bei diesem einfachen Verfahrensablauf nur zwei Möglichkeiten, welchem Datenpaket ein empfangener kodierter Datenblock zugeordnet werden kann und mit welcher eventuell zuvor nicht fehlerfrei dekodierten und gespeicherten Sequenznummer SQ# ein weiterer Dekodierungsversuch vorgenommen werden kann. Folglich kann folgende Vorgehensweise am Empfänger implementiert werden: Wenn ein Datenblock empfangen worden ist, so wird zuerst versucht, die Sequenznummer SQ# zu dekodieren und die CRC überprüft. Liegen für diese Sequenznummer SQ# bereits empfangene Datenblöcke vor, so kann eine Dekodierung unter Einbeziehung bereits empfangener Datenblöcke versucht werden. Wurde die Sequenznummer nicht fehlerfrei dekodiert, so kann trotzdem eine gemeinsame Kombination/Dekodierung mit der bereits empfangenen und für diesen Zeitschlitz ältesten empfangenen Sequenznummern SQ# versucht werden. Gibt es kein sinnvolles Ergebnis, so kann es sich um einen fehlerhaften oder bedingt einen neuen Datenblock handeln. Zur Kombination können auch weitere Daten zu bisher nicht erfolgreich dekodierten oder erfolgreich dekodierten und gleichen Sequenznummern herangezogen werden. Durch das eingeführte Verfahren kann eine wiederholte Sendung (re-transmission) in einem Zeitschlitz nur zu einem (dem ältesten) Datenpaket mit gleicher Sequenznummer gehören, was den Kombinationsaufwand von bis zu insbesondere N möglichen Sequenznummern SQ# auf hier maximal zwei Sequenznummern SQ# reduziert.

Bei erfolgreicher Dekodierung der Sequenznummer SQ# kann dann eine Dekodierung der dazugehörigen Datenblöcke versucht werden. War dieses auch erfolgreich, so kann eine Bestätigung unter Angabe der Sequenznummer SQ# über einen Rückkanal an den Sender übertragen werden und die zu diesem Datenpaket gehörenden gespeicherten Sequenznummern SQ# und Datenblöcke können im Sender gelöscht werden. Nach entsprechender Verarbeitung können auch empfängerseitige redundante Daten gelöscht werden.

Im anderen Fall kann eine Negativ-Bestätigung mit aber auch ohne Sequenznummer SQ# gesendet werden, wenn bis dahin die Sequenznummer nicht fehlerfrei dekodiert werden konnte. Insbesondere kann auch eine Negativbestätigung mit Angabe der Ressource oder des Ressourcenelementes (tx) übertragen werden.

Dieses Verfahren kann unabhängig vom eigentlichen Dekodierverfahren für die Dekodierung von Sequenznummer SQ# (Header) und Datenblöcken verwendet werden, d.h. es können z.B. auch Kopfabschnitt-bezogene H-ARQ-Verfahren von Typ I/II/III verwendet werden. Auch ist das Verfahren unabhängig von der eigentliche Dekodierung zu sehen, d.h. unabhängig davon, ob maximum ratio combining und/oder Faltungscodierung oder Turbocodierung oder andere Kodierverfahren einzeln oder in Kombination verwendet werden.

Bei einer anderen Ausführungsform wird die Anzahl von Zeitschlitzen in einem Zyklus Cx so gering gewählt, dass die Dauer eines Zyklus Cx geringer als die Rundlaufverzögerung RTD_{MIN} ist. In einem solchen Fall kann nach dem Aussenden eines Datenpakets beim entsprechenden Zeitschlitz tx(Cx+1) des nächsten Zyklus C(x+1) noch keine Empfangsbestätigung zurück erhalten sein. Daher wird ein neues Datenpaket bzw. eine neue Paketdateneinheit PDU abgesendet. Bei einem solchen modifizierten Verfahren muss empfängerseitig entsprechend nicht nur zwischen zwei Möglichkeiten für die Datenherkunft sondern zwischen drei - oder mehr - Möglichkeiten unterschieden werden. Dies ist aber immer noch vorteilhafter als zwischen einer in der Praxis wesentlich höheren Anzahl (N) an Möglichkeiten unterscheiden zu müssen.

Ein solches modifiziertes Verfahren kann auch dann verwendet werden, wenn die Dauer eines Zyklus Cx ausreichend lang ist, aber Datenpakete trotzdem nicht im nächsten Zyklus sondern erst zu einem späteren Zeitpunkt abgesendet werden sollen. Ein Grund dafür kann beispielsweise sein, dass empfängerseitig erst eine (Teil-) Verarbeitung von empfangenen Datenpaketen erfolgen soll, bevor eine Empfangsbestätigung zurück gesendet werden soll.

Gemäß einer noch anderen Ausführungsform ist die Zuweisung der Zeitschlitze nicht notwendig zyklisch erforderlich. Entscheidend ist eine senderseitige Zuweisung bestimmter Ressourcenelemente, insbesondere Zeitschlitze für den Versand bestimmter Datenpakete und der Zeitpunkte für die erneute Versendung. Empfängerseitig muss dann das entsprechende Zuweisungsverfahren bekannt sein.

Dieses Verfahren ist auch unabhängig von den verwendeten physikalischen Übertragunskanälen anwendbar, es ist auch möglich, den physikalischen Übertragungskanal zu wechseln, solange oben genannte Struktur eingehalten wird. Insbesondere kann das Verfahren auch bei leitungsgebundenen Systemen verwendet werden, bei denen für die Verbindung ein Kabel verwendet wird. Als Kabel können elektrisch oder optisch leitende Materialien verwendet werden.

Anstelle oder zusätzlich zu dem Übertragen von Datenpaketen über eine Ressource, die in vorstehend beschriebene Zeitschlitze tx unterteilt ist, können für die Übertragung auch weitere Ressourcen verwendet werden.

So ist es für sich bekannt, zwischen zwei oder mehr Stationen über eine Schnittstelle V mehrere Verbindungen aufzubauen. Dabei werden die verschiedenen Verbindungen V auf eine Vielzahl von Frequenzkanälen verteilt. Weiterhin ist es für sich bekannt, für die verschiedenen Verbindungen bzw. Übertragungen von Datenpaketen verschiedene Codes in Verbindung mit einer Codespreizung (CDMA) zu verwenden.

Als Ressource für die Zuweisung bestimmter Datenpakete und deren Wiederholungssendung oder für die Zuweisung der Versendung von Paketdateneinheiten zu einem Datenpaket kann entsprechend neben der in Zeitschlitze aufgeteilten Zeitachse als Ressource auch ein in eine Vielzahl von Frequenzkanälen aufgeteiltes Frequenzband oder eine Vielzahl von Codes bei einem Codespreizverfahren dienen. Den verschiedenen Datenpaketen können so z.B. verschiedene Codes Frequenzen bzw. zugewiesen werden.

Im Fall der Codespreizung kann beispielsweise einem ersten Datenpaket (SQ10) und allen Re-Transmissionen und/oder allen kodierten Paketdateneinheiten mit gleicher bzw. dazu gehörender Sequenznummer ein erster Code (A) zugewiesen werden. Einem zweiten Datenpaket (SQ11) und allen Re-Transmissionen und/oder allen kodierten Paketdateneinheiten mit gleicher bzw. dazu gehörender Sequenznummer (11) ein zweiter Code (B) zugewiesen werden, usw.

Insbesondere ist auch eine Kombination der verschiedenen Ausführungsformen möglich.

Die vorstehenden Verfahren können insbesondere in Tele-Kommunikationssystemen eingesetzt werden. Aber auch der Einsatz in beliebigen anderen Systemen mit einer Übertragung von mit einem Identifizierungskennzeichen versehenen Datenpaketen ist möglich. Dazu zählen als Kommunikationssysteme insbesondere auch reine Datendienste, wie z.B. lokale Netzwerke.

## Patentansprüche

1. Verfahren zur Übertragung von Datenpaketen (PDU) über eine Schnittstelle (V, UL, DL; FACH,BCCH) in einem Kommunikationssystem (GSM, UMTS) zwischen einer Sendereinrichtung (BS) und einer Empfängereinrichtung (MS),
- wobei eine Aussendung von bezugslosen Datenpaketen ohne Inhaltsbezug auf vorherige Datenpakete und/oder von inhaltsbezogenen Datenpaketen mit Inhaltsbezug auf vorherige Datenpakete über eine unterteilte Ressource (t) durchgeführt wird und
- wobei die Aussendung dieser Datenpakete (PDU) jeweils einem bestimmten Ressourcenelement (tx) der Ressource (t) zugeordnet erfolgt,
**dadurch gekennzeichnet,**
**dass** die Zuordnung der Datenpakete (PDU) zu den Ressourcenelementen (t2, t6) nach einem vorbestimmten und nicht zufälligen Schema (C1, C2) unter verschiedener Behandlung der bezugslosen und der inhaltsbezogenen Datenpakete (SQ11 bei t2 bzw. SQ11 bei t6) erfolgt.

2. Verfahren nach Anspruch 1, bei dem
die Zuordnung der Datenpakete (PDU) senderseitig erfolgt und mittels des Schemas (t1, t5; t2(C1) zu t2(C2)) empfängerseitig eine Zuordnung empfangener Datenpakete (PDU) als ein bezugsloses Datenpaket (PDU; SQ11 bei t2) oder zu einer begrenzten Anzahl, insbesondere eines bestimmten vorherigen inhaltsbezogenen Datenpakets (SQ11 bei t6) durchgeführt wird.

3. Verfahren nach Anspruch 1 oder 2, bei dem
als Ressource eine in Zeitschlitze (tx) aufgeteilte Zeitachse (t) und/oder als Ressource ein in eine Vielzahl von Frequenzkanälen aufgeteiltes Frequenzband und/oder als Ressource eine Vielzahl von Codes bei einem Codespreizverfahren verwendet wird.

4. Verfahren nach einem vorstehenden Anspruch, bei dem
die Datenpakete (PDU) mit einem jeweiligen Identifizierungskennzeichen (SQ#) übertragen werden.

5. Verfahren nach Anspruch 4, bei dem
als Datenpaket (PDU) ein Datenpaket mit einer Datenpaketnummer oder Sequenznummer (SQ#) als das bestimmte Identifizierungskennzeichen übertragen wird.

6. Verfahren nach Anspruch 4 oder 5, bei dem
als Datenpaket (PDU) ein Datenpaket mit einem Kopfabschnitt, der das bestimmte Identifizierungskennzeichen (SQ#) aufweist, übertragen wird.

7. Verfahren nach einem vorstehenden Anspruch, bei dem
das Schema eine zyklische Zuordnung zu den Ressourcenelementen (t(x+N)) durchführt.

8. Verfahren nach einem vorstehenden Anspruch, bei dem Datenpakete (SQ11) nach einer negativen oder nicht innerhalb einer vorgegebenen Zeitdauer eingetroffenen Empfangsbestätigung (ACK(),NACK()) bei einem späteren gemäß dem Schema eindeutig zugeordneten Ressourcenelement (t6 bzw. t2(C2)) übertragen werden.

9. Verfahren nach einem vorstehenden Anspruch, bei dem
als inhaltsbezogene Datenpakete (PDU) Datenpakete (SQ11 bei t6) mit gleichem Inhalt eines Datenblocks eines vorherigen Datenpakets (SQ11 bei t2) und/oder Datenpakete (SQ11 bei t6) mit einem zum Datenblockinhalt eines vorherigen Datenpakets (SQ11 bei t2) zugeordneten Datenblockinhalt übertragen werden.

10. Verfahren nach Anspruch 9, bei dem
als inhaltsbezogene Datenpakete (PDU) mit zugeordnetem Datenblockinhalt kodierte Datenpakete zu diesem Datenpaket übertragen werden.

11. Verfahren nach einem vorstehenden Anspruch, bei dem
die inhaltsbezogenen Datenpakete (PDU) gemäß einem Fehlererfassungs- oder Fehlerkorrekturverfahren, vorzugsweise einem ARQ-Verfahren verarbeitet werden.

12. Verfahren nach einem vorstehenden Anspruch, bei dem empfängerseitig trotz eines nicht fehlerfrei dekodierbar oder bestimmbar zuzuordnenden Datenpakets ein Kombinierungs- oder Dekodierungsversuch mit einem Datenpaket vorgenommen wird, das diesem Datenpaket gemäß dem Schema zuzuordnen ist.

13. Verfahren nach einem vorstehenden Anspruch, bei dem
falls zu einem bestimmten Ressourcenelement (t(x + iN)) ein weiterer inhaltsbezogener Datenblock zu einem zumindest teilweise übertragenen Datenpaket (PDU) übertragen werden soll, dann ein weiterer Datenblock vom ältesten bisher nicht erfolgreich übertragenen Datenpaket als inhaltsbezogenes Datenpaket übertragen wird.

14. Verfahren nach einem vorstehenden Anspruch, bei dem
- ein Grenzwert der für eine Verbindung verfügbaren Anzahl (WS) von Ressourcenelementen (tx) der Ressource (t) festgelegt wird und
- solange die Anzahl der als inhaltsbezogene Datenpakete (PDU) zu übertragenden Datenpakete, die zu bereits übertragenen Datenpaketen zugeordnet sind, den Grenzwert oder einen festgelegten Wert mit Bezug auf den Grenzwert überschreitet, nur noch solche zugeordneten Datenpakete übertragen werden.

15. Verfahren nach einem vorstehenden Anspruch, bei dem
als die Schnittstelle eine Luftschnittstelle (V, UL, DL; FACH,BCCH) oder ein elektrisch oder optisch leitendes Medium verwendet wird.

16. Kommunikationssystem, insbesondere zum Durchführen eines Verfahren nach einem vorstehenden Anspruch, aufweisend:
- eine Sendereinrichtung (BS),
- eine Empfängereinrichtung (MS),
- eine Schnittstelle (V, UL, DL; FACH,BCCH) mit einer unterteilten Ressource (t) zur Übertragung von Datenpaketen (PDU) zwischen der Sendereinrichtung (BS) und der Empfängereinrichtung (MS),
- eine Sender-Ressourcenzuordnungseinrichtung (X) zum Aussenden von bezugslosen Datenpaketen ohne Inhaltsbezug auf vorherige Datenpakete und/oder von inhaltsbezogenen Datenpaketen mit Inhaltsbezug auf vorherige Datenpakete über die unterteilte Ressource (t) auf der Schnittstelle (V) und zum Zuordnen der Aussendung eines jeden dieser Datenpakete (PDU) zu jeweils einem bestimmten Ressourcenelement (tx) der Ressource (t) und
- eine Empfänger-Ressourcenzuordnungseinrichtung zum Verwalten derart zugeordneter, bei der Empfängereinrichtung (MS) eingetroffener Datenpakete,
**dadurch gekennzeichnet,**
**dass** die Sender- und die Empfänger-Ressourcenzuordnungseinrichtung (X) zum Zuordnen der Datenpakete (PDU) zu den Ressourcenelementen (t2, t6) nach einem vorbestimmten und nicht zufälligen Schema (C1, C2) unter verschiedener Behandlung der bezugslosen und der inhaltsbezogenen Datenpakete (SQ11 bei t2 bzw. SQ11 bei t6) ausgebildet sind.

17. Kommunikationssystem nach Anspruch 16, aufweisend
ein Funk-Kommunikationssystem mit zumindest einer Basisstation (BS) als Sendereinrichtung und zumindest einer stationären und/oder mobilen Datenendeinrichtung (MS) als Empfängereinrichtung.

18. Kommunikationssystem nach Anspruch 16 oder 17, ausgebildet als ein Tele-Kommunikationssystem oder Datennetz.
